# EUROPÄISCHE PATENTSCHRIFT

(11) **EP 4 110 684 B1**
(45) Veröffentlichungstag und Bekanntmachung des Hinweises auf die Patenterteilung: **03.04.2024**
(21) Anmeldenummer: 21703412.3
(22) Anmeldetag: 03.02.2021
(51) Int. Cl.: B62D 53/00

(54) **ROUTENZUGANHÄNGER**
TUGGER TRAIN TRAILER
REMORQUE DE TRAIN DE MANUTENTION

(30) Priorität: 28.02.2020 DE 102020105370
(43) Veröffentlichungstag der Anmeldung: 04.01.2023
(73) Patentinhaber: LR Intralogistik GmbH, 84109 Wörth a. d. Isar (DE)
(72) Erfinder: KOLLMANNSBERGER, Josef, 84106 Volkenschwand (DE); ZIMMER, Michael, 84030 Ergolding (DE)
(74) Vertreter: Patentship Patentanwaltgesellschaft
(86) Internationale Anmeldenummer: PCT/EP2021/052479
(87) Internationale Veröffentlichungsnummer: WO 2021/170356

(56) Entgegenhaltungen:
- EP-A2- 2 439 124
- EP-A2- 2 805 852
- EP-B1- 3 126 190
- US-A1- 2015 225 007

## Beschreibung

Die Erfindung betrifft einen Routenzuganhänger mit einem Fahrgestell und einer Transportvorrichtung für die Aufnahme mindestens eines Rollen aufweisenden Ladungsträgers, wobei der Routenzuganhänger mit mindestens einem Verriegelungsmittel versehen ist, das den aufgenommenen Ladungsträger in Fahrzeugquerrichtung des Routenzuganhängers sichert.

Für den innerbetrieblichen Transport von Ladungen, beispielsweise im Produktionsbereich von Produktionsbetrieben, kommen zunehmend Routenzüge zum Einsatz, die aus einem Zugfahrzeug, beispielsweise einem Schlepper, und einer Mehrzahl von an dem Schlepper angehängten Routenzuganhängern bestehen, auf denen Ladungsträger mit entsprechenden Ladungen transportiert werden.

Aus der EP 3 126 190 B1 ist ein gattungsgemäßer Routenzuganhänger bekannt, der mit Verriegelungsmitteln versehen ist, die einen aufgenommenen Ladungsträger in Fahrzeugquerrichtung des Routenzuganhängers sichern. Die Verriegelungsmittel sind hierbei als rein mechanisch betätigte und von dem Ladungsträger überfahrbare Klinken ausgebildet. Die Klinken werden beim Aufschieben des Ladungsträgers auf den Routenzuganhänger von dem Ladungsträger überfahren und von dem Ladungsträger nach unten in eine Entriegelungsstellung gedrückt. Bei einem derartigen rein mechanisch betätigten Verriegelungsmittel ist nachteilig, dass zum Betätigen des Verriegelungsmittel in die Entriegelungsstellung eine den Ladungsträger schiebende Bedienperson eine zusätzliche Schubkraft an dem Ladungsträger aufbringen muss, um die Verriegelungsmittel beim Überfahren mit dem Ladungsträger in die Entriegelungsstellung zu betätigen. Die zusätzliche an dem Ladungsträger aufzubringende Schubkraft führt zu einer schlechten Bedienungsergonomie beim Einschieben des Ladungsträgers. Zudem weist das aus der EP 3 126 190 B1 bekannte Verriegelungsmittel einen hohen Bauaufwand mit vielen Komponenten auf, wodurch das aus der EP 3 126 190 B1 bekannte Verriegelungsmittel einen hohen Bauraumbedarf im Routenzuganhänger benötigt und fehleranfällig ist.

Aus der EP 2 805 852 A2 ist ein Routenzuganhänger mit einem Verriegelungsmitteln bekannt, das eine rein mechanisch betätigte und von dem Ladungsträger überfahrbare Klinke aufweist.

Die US 2015/225007 A1 und die EP 2 439 124 A2 offenbaren einen Routenzuganhänger mit einem Verriegelungsmittel, der mittels eines Fußhebels in eine Entriegelungsstellung betätigbar ist und von dem eingeschobenen Ladungsträger in eine Verriegelungsstellung betätigt wird.

Weiterhin ist es bei Routenzuganhänger bekannt, rein elektrisch betätigte Verriegelungsmittel vorzusehen, die einen aufgenommenen Ladungsträger in Fahrzeugquerrichtung des Routenzuganhängers sichern. Bei rein elektrisch betätigten Verriegelungsmitteln muss eine Bedienperson vor dem Einschieben eines Ladungsträgers in den Routenzuganhänger einen Entriegelungsvorgang des Verriegelungsmittel ansteuern und nach dem Einschieben des Ladungsträgers in den Routenzuganhänger einen Verriegelungsvorgang des Verriegelungsmittels ansteuern, währenddessen die Bedienperson den Ladungsträger in der richtigen Position halten muss. Zum Sichern des eingeschobenen Ladungsträgers muss somit die Bedienperson zwei Arbeitsschritte durchführen, nämlich den Ladungsträger in der richtigen Position halten und zeitgleich den Verriegelungsvorgang des Verriegelungsmittels ansteuern. Dies führt zu einer schlechten Bedienungsergonomie beim Verriegeln des eingeschobenen Ladungsträgers. Zudem führen rein elektrisch betätigte Verriegelungsmittel zu erhöhten Prozesszeiten, da sich die Zeit für das Verriegeln des eingeschobenen Ladungsträgers an die Zeit für das Einschieben des Ladungsträgers in den Routenzuganhänger anschließt.

Der vorliegenden Erfindung liegt die Aufgabe zugrunde, einen Routenzuganhänge der eingangs genannten Art zur Verfügung zu stellen, der hinsichtlich der Bedienungsergonomie beim Einschieben und Verriegeln eines Ladungsträgers verbessert ist.

Diese Aufgabe wird erfindungsgemäß dadurch gelöst, dass das Verriegelungsmittel ein zwischen einer Verriegelungsstellung und einer Entriegelungsstellung elektromechanisch betätigbares Sperrelement aufweist, wobei das Sperrelement von einer Federeinrichtung in Richtung der Verriegelungsstellung betätigt ist und mittels einer elektrischen Antriebseinrichtung in die Entriegelungsstellung betätigt ist. Der erfindungsgemäße Gedanke besteht somit darin, an dem Routenzuganhänger eine elektromechanische Verriegelung des Ladungsträgers vorzusehen, bei der der Entriegelungsprozess elektrisch mittels der elektrischen Antriebseinrichtung und der Verriegelungsprozess mechanisch mittels der Federeinrichtung erfolgt. Die Betätigung des Sperrelements mittels der elektrischen Antriebseinrichtung in die Entriegelungsstellung führt zu einer verbesserten Bedienungsergonomie beim Einschieben des Ladungsträgers, da von der Bedienperson keine zusätzliche Schubkraft an dem Ladungsträger aufgebracht werden muss, um das Verriegelungsmittel beim Überfahren mit dem Ladungsträger in die Entriegelungsstellung zu betätigen. Die Betätigung des Sperrelements mittels der Federeinrichtung in die Verriegelungsstellung führt zu einer verbesserten Bedienungsergonomie beim Verriegeln des in den Routenzuganhänger eingeschobenen Ladungsträgers, da von der Bedienperson kein zusätzlicher Arbeitsschritt für die Betätigung des Sperrelements in die Verriegelungsstellung erforderlich ist.

Gemäß einer vorteilhaften Ausführungsform der Erfindung weist das Sperrelement einen Sperrfinger auf, der an einer um eine Schwenkachse schwenkbar gelagerten Welle angeordnet. Mit einem derartigen drehbar gelagerten Sperrfinger kann auf einfache Weise durch Drehen der Welle der Sperrfinger zwischen der Entriegelungsstellung und der Verriegelungsstellung betätigt werden.

Die Schwenkachse der Welle ist gemäß einer vorteilhaften Ausführungsform der Erfindung in Fahrzeugquerrichtung angeordnet. Dies ermöglicht eine platzsparende Anordnung des Verriegelungsmittels zwischen den Rollen eines aufgenommenen Ladungsträgers.

Die Federeinrichtung ist vorteilhafterweise als auf der Welle angeordnete Drehfeder, insbesondere Schenkelfeder, ausgebildet. Mit einer derartigen Drehfeder kann auf einfache und bauraumsparende Weise die Welle betätigt und der Sperrfinger in Richtung der Verriegelungsstellung betätigt werden.

Gemäß einer vorteilhaften Ausführungsform der Erfindung weist das Sperrelement einen an der Welle angeordneten Betätigungshebel auf, der mittels der elektrischen Antriebseinrichtung betätigbar ist. Hierdurch kann auf einfache Weise die Welle von der elektrischen Antriebseinrichtung betätigt und der Sperrfinger in die Entriegelungsstellung betätigt werden.

Gemäß einer vorteilhaften Ausführungsform der Erfindung weist die elektrische Antriebseinrichtung einen an einer Antriebswelle der Antriebseinrichtung angeordneten Betätigungsfinger auf, mit dem die Welle des Sperrelements, insbesondere der Betätigungshebel des Sperrelements, betätigbar ist. Mit einem derartigen Betätigungsfinger kann auf einfache Weise von der elektrischen Antriebseinrichtung der Betätigungshebel des Sperrelements betätigt und somit die Welle des Sperrelements betätigt werden, um das Sperrelement mit der elektrischen Antriebseinrichtung in die Entriegelungsstellung zu betätigen.

Der Betätigungsfinger ist hierzu vorteilhafterweise von der Antriebseinrichtung zwischen einer Ausgangsstellung und einer Betätigungsstellung verschwenkbar, wobei in der Ausgangsstellung des Betätigungsfingers das Sperrelement mittels der Federeinrichtung in die Verriegelungsstellung betätigbar ist und sich in der Betätigungsstellung des Betätigungsfingers das Sperrelement in der Entriegelungsstellung befindet. Mit der Antriebseinrichtung kann somit in einfacher Weise das Sperrelement in die Entriegelungsstellung betätigt werden.

Die Antriebswelle der Antriebseinrichtung ist gemäß einer vorteilhaften Ausgestaltungsform der Erfindung parallel zur Welle des Sperrelements angeordnet. Dies führt zu einem platzsparenden Aufbau des Verriegelungsmittels.

Gemäß einer vorteilhaften Weiterbildung der Erfindung ist der Betätigungsfinger mit einer drehbaren Betätigungsrolle versehen, mit der der Betätigungshebel des Sperrelements betätigbar ist. Mit der drehbaren Betätigungsrolle wird eine geringe Reibung zwischen der Betätigungsrolle und dem Betätigungshebel des Sperrelements erzielt, so dass eine kleinbauende elektrische Antriebseinrichtung vorgesehen werden kann.

Gemäß einer bevorzugten Ausführungsform der Erfindung ist der Sperrfinger kreisbogenförmig ausgebildet. Mit einer derartigen Form des Sperrfingers wird auf einfache Weise verhindert, dass sich der Sperrfinger mit dem Ladungsträger verhaken kann, so dass eine hohe Funktionssicherheit des Verriegelungsmittels erzielt wird.

Gemäß einer vorteilhaften Weiterbildung der Erfindung weist das Verriegelungsmittel zwei Sperrelemente auf, die gegenüberliegenden Fahrzeugseiten zugeordnet sind. Mit einem derartigen Verriegelungsmittel kann bei einem Routenzuganhänger, der von beiden Fahrzeugseiten mit einem Ladungsträger beladen und/oder entladen werden kann, ein aufgenommener Ladungsträger in einfacher Weise in Fahrzeugquerrichtung gesichert werden.

Besondere Vorteile ergeben sich hierbei, wenn gemäß einer Weiterbildung der Erfindung die beiden Sperrelemente mittels einer elektrischen Antriebseinrichtung in die jeweilige Entriegelungsstellung betätigbar sind. Für die Betätigung der beiden Sperrelemente in die Entriegelungsstellung ist somit nur eine einzige elektrische Antriebseinrichtung erforderlich, wodurch sich ein einfacher Aufbau mit wenigen Komponenten und ein platzsparender Aufbau eines zwei Sperrelemente umfassenden Verriegelungsmittels erzielen lässt.

Die Wellen der beiden Sperrelemente sind hierbei gemäß einer vorteilhaften Ausgestaltungsform der Erfindung voneinander beabstandet angeordnet, wobei die Antriebswelle der Antriebseinrichtung mittig zwischen den Wellen der Sperrelemente angeordnet ist. Dies ermöglicht es auf einfache Weise, durch eine Drehbewegung der Antriebswelle der Antriebseinrichtung in eine erste Drehrichtung eines der beiden Sperrelemente in die Entriegelungsstellung zu betätigen und durch eine Drehbewegung der Antriebswelle der Antriebseinrichtung in eine zweite, entgegengesetzte zweite Drehrichtung das andere der beiden Sperrelemente in die Entriegelungsstellung zu betätigen. Zudem wird hierdurch eine hohe Betriebssicherheit erzielt, da von der elektrischen Antriebseinrichtung jeweils nur eines der beiden Sperrelemente in die Entriegelungsstellung betätigt werden kann, so dass eine fehlerhafte Beladung des Ladungsträgers von der falschen Fahrzeugseite des Routenzuganhängers oder eine fehlerhafte Entladung des Ladungsträgers zur falschen Fahrzeugseite des Routenzuganhängers sicher vermieden werden kann.

Zur Ansteuerung des Verriegelungsmittels in die Entriegelungsstellung ist gemäß einer vorteilhaften Ausgestaltungsform der Erfindung ein Ansteuerelement, insbesondere ein Tastschalter, vorgesehen, wobei die elektrische Antriebseinrichtung in Abhängigkeit von dem Ansteuerelement derart angesteuert ist, dass die elektrische Antriebseinrichtung bei einer Betätigung des Ansteuerelements das Sperrelement in die Entriegelungsstellung betätigt. Mit einem derartigen Ansteuerelement kann die Bedienperson in einfacher Weise das Sperrelement in die Entriegelungsstellung betätigen.

Die elektrische Antriebseinrichtung ist hierzu in Abhängigkeit von dem Ansteuerelement derart angesteuert, dass die elektrische Antriebseinrichtung bei einer Betätigung des Ansteuerelements den Betätigungsfinger in die Betätigungsstellung verschwenkt. Durch ein Verschwenken des Betätigungsfinger in die Betätigungsstellung wird das Sperrelement in die Entriegelungsstellung betätigt, so dass in einfacher Weise der Entriegelungsprozess elektrisch mittels der elektrischen Antriebseinrichtung durchführbar ist.

Zur Ansteuerung des Verriegelungsmittels in die Verriegelungsstellung ist gemäß einer vorteilhaften Ausgestaltungsform der Erfindung eine Sensoreinrichtung zur Detektierung einer Einschubposition des Ladungsträgers vorgesehen, wobei die elektrische Antriebseinrichtung in Abhängigkeit von der Sensoreinrichtung derart angesteuert ist, dass bei Erreichen der Einschubposition das Sperrelement mittels der Federeinrichtung in Richtung der Verriegelungsstellung betätigbar ist. Der Verriegelungsprozess wird somit durch das Einschieben des Ladungsträgers und Erreichen einer bestimmten Einschubposition des Ladungsträgers ausgelöst, was mit einer Sensoreinrichtung in einfacher Weise detektiert werden kann.

Die elektrische Antriebseinrichtung ist hierzu in Abhängigkeit von der Sensoreinrichtung derart angesteuert, dass die elektrische Antriebseinrichtung bei Erreichen der Einschubposition den Betätigungsfinger in die Ausgangsstellung verschwenkt. Durch ein Verschwenken des Betätigungsfinger in die Ausgangsstellung kann das Sperrelement mittels der Federeinrichtung in Richtung der Verriegelungsstellung betätigt werden, so dass in einfacher Weise der Verriegelungsprozess mechanisch mittels der Federeinrichtung durchführbar ist.

Die Sensoreinrichtung ist gemäß einer vorteilhaften Ausführungsform der Erfindung als Lichtschranke ausgebildet. Mit einer Lichtschranke kann in sicherer und berührungsloser Weise beim Einschieben eines Ladungsträgers eine vorgegebene Einschubposition des Ladungsträgers ermittelt werden, bei der die elektrische Antriebseinrichtung den Betätigungsfinger zurück in die Ausgangsstellung verschwenkt.

Gemäß einer vorteilhaften Weiterbildung der Erfindung ist die Sensoreinrichtung in Fahrzeugquerrichtung mittig angeordnet. Dies führt zu besonderen Vorteilen, da bereits dann, wenn der Ladungsträger zur Hälfte in den Routenzuganhänger eingeschoben ist, die elektrische Antriebseinrichtung den Betätigungsfinger zurück in die Ausgangsstellung verschwenkt, so dass dann wenn der Ladungsträger vollständig in den Routenzuganhänger eingeschoben ist, das Sperrelement von der Federeinrichtung in die Verriegelungsstellung betätigt werden kann, um den aufgenommenen Ladungsträger zu sichern. Dies führt zu kurzen Prozesszeiten, da die Zeit für das Zurückschwenken des Betätigungsfingers in die Ausgangsstellung durch die elektrische Antriebseinrichtung parallel geschaltet ist zu der Einschubzeit des Ladungsträgers. Zudem wird durch diese Anordnung der Sensoreinrichtung erzielt, dass bei einem Routenzuganhänger, der von beiden Fahrzeugseiten beladen werden kann, mit nur einer Sensoreinrichtung in der Fahrzeugmitte des Trailerzuganhängers Auslösesignale für beide an den gegenüberliegenden Fahrzeugseiten angeordnete Sperrelemente erzeugt werden können.

Der Routenzuganhänger weist gemäß einer vorteilhaften Ausgestaltungsform der Erfindung zur Aufnahme des mindestens einen Ladungsträgers eine Transportvorrichtung auf, insbesondere eine gegenüber dem Fahrgestell anhebbare und absenkbare Transportvorrichtung. Mit einer Transportvorrichtung können auf einfache Weise ein oder mehrere Ladungsträger aufgenommen werden und von dem Routenzuganhänger transportiert werden. Sofern die Transportvorrichtung anhebbar und absenkbar ist, wird auf einfache Weise erzielt, dass bei abgesenkter Transportvorrichtung die Ladungsträger auf ihren Rollen in den Routenzuganhänger eingeschoben werden können. Während des Transports der Ladungsträger im Routenzuganhänger befindet sich die Transportvorrichtung in der angehobene Stellung, so dass aufgenommene Ladungsträger angehoben sind und nicht auf ihren eigene Rollen mitlaufen.

Die Transportvorrichtung weist gemäß einer vorteilhaften Ausführungsform der Erfindung eine Plattform zum Auffahren der Rollen des Ladungsträgers auf. Die Ladungsträger stützen sich somit mit ihren Rollen auf der Plattform ab. Auf eine derartige eine Plattform aufweisenden Transportvorrichtung können somit in einfacher Weise ein oder mehrere Ladungsträger mit ihren Rollen aufgeschoben werden und in dem Routenzuganhänger transportiert werden.

Das Verriegelungsmittel ist hierbei vorteilhafterweise an der Plattform angeordnet. An der Plattform kann das Verriegelungsmittel auf einfache und bauraumsparende Weise angeordnet werden und ermöglicht es in sicherer Weise, einen aufgenommenen Ladungsträger in Fahrzeugquerrichtung des Routenzuganhängers zu sichern.

Die Erfindung betrifft weiterhin ein System umfassend einen erfindungsgemäßen Routenzuganhänger und mindestens einen Rollen aufweisenden Ladungsträger, wobei der Ladungsträger an der Unterseite eine Anschlagfläche für das Sperrelement aufweist. Sofern bereits dann, wenn der Ladungsträger zur Hälfte in den Routenzuganhänger eingeschoben ist, die elektrische Antriebseinrichtung den Betätigungsfinger zurück in die Ausgangsstellung verschwenkt, wird das Sperrelement von der Federeinrichtung in Richtung der Verriegelungsstellung betätigt. Dabei kommt das Sperrelement mit der Anschlagfläche an der Unterseite des Ladungsträgers in Kontakt und gleitet bei der weiteren Einschubbewegung des Ladungsträgers an der Anschlagfläche entlang. Wenn der Ladungsträger vollständig in den Routenzuganhänger eingeschoben ist, hat das Sperrelement keinen Kontakt mehr zu der Anschlagfläche, so dass das Sperrelement von der Federeinrichtung in die Verriegelungsstellung betätigt werden kann, um den aufgenommenen Ladungsträger zu sichern.

Der erfindungsgemäße Routenzuganhänger weist eine Reihe von Vorteilen auf.

Der erfindungsgemäße Routenzuganhänger ist mit einer elektromechanischen Verriegelung des Ladungsträgers versehen, bei der der Entriegelungsprozess elektrisch erfolgt und der Verriegelungsprozess mechanisch erfolgt.

Durch die elektrische Entriegelung, wobei das Sperrelement von der elektrischen Antriebseinrichtung in die Entriegelungsstellung betätigt wird, ist von einer Bedienperson keine zusätzliche Kraft beim Einschieben eines Ladungsträgers in den Routenzuganhänger aufzubringen, um das Sperrelement in die Entriegelungsstellung zu betätigen. In Verbindung mit dem entsprechenden Ansteuerelement kann bei einem Routenzuganhänger mit mehreren Einfahrkanälen für mehrere Ladungsträger weiterhin in sicherer Weise bestimmt werden, welcher Einfahrkanal mit einem Ladungsträger beladen bzw. entladen wird.

Durch die mechanische, federvorgespannte Verriegelung, wobei das Sperrelement von der Federeinrichtung in die Verriegelungsstellung betätigt wird, wird erzielt, dass der eingeschobene Ladungsträger sofort bei Erreichen der Ladeposition verriegelt wird. Zudem wird mit der mechanischen Verriegelung ein hohe Ausfallsicherheit des Verriegelungsmittels erzielt, da die Federeinrichtung in der Verriegelungsstellung des Verriegelungsmittels in der entlasteten Stellung ist und ein Ausfall der elektrischen Antriebseinrichtung in der Verriegelungsstellung des Verriegelungsmittels keine Auswirkung auf die Funktion des Verriegelungsmittels hat.

Weiterhin wird bei dem erfindungsgemäßen Verriegelungsmittel ermöglicht, bei einem Ausfall der elektrischen Antriebseinrichtung einen aufgenommenen Ladungsträger zu entnehmen, da die Welle des Sperrelements in einfacher Weise manuell gedreht werden kann, um den entsprechenden Sperrfinger in die Entriegelungsstellung zu betätigen.

Zudem wird im Gegensatz zu einer rein elektrischen Verriegelung bei der erfindungsgemäßen Verriegelung die Zeit zum Verriegeln des Ladungsträgers mit der Zeit zum Einschieben des Ladungsträgers parallel geschaltet, so dass kürzere Prozesszeiten erzielt werden.

Sofern der Routenzuganhänger an beiden Fahrzeugseiten mit Verriegelungsmitteln versehen ist, um ein beidseitiges Beladen und Entladen des Routenzuganhängers mit Ladungsträgern zu ermöglichen, können die beiden Verriegelungsmittel in einfacher Weise mit einer einzigen elektrischen Antriebseinrichtung betätigt werden.

Zudem ist es durch entsprechende Gestaltung der Sperrfinger in einfacher Weise möglich, Ladungsträger mit unterschiedlichen Unterfahrhöhen zu verriegeln.

Weitere Vorteile und Einzelheiten der Erfindung werden anhand des in den schematischen Figuren dargestellten Ausführungsbeispiels näher erläutert. Hierbei zeigt
- Figur 1: einen erfindungsgemäßen Routenzuganhänger mit erfindungsgemäßen Verriegelungsmitteln in einer perspektivischen Darstellung,
- Figur 2: den Routenzuganhänger der Figur 1 in einer Seitenansicht in einer abgesenkten Position einer Transportvorrichtung,
- Figur 3: den Routenzuganhänger der Figur 2 mit der Transportvorrichtung in der angehobenen Position,
- Figur 4: den Routenzuganhänger der Figur 1 mit einem in der Entriegelungsstellung befindlichem Verriegelungsmittel,
- Figur 5: einen Ausschnitt des Routenzuganhängers mit einer Schnittdarstellung des Verriegelungsmittels, wobei sich das Verriegelungsmittel in der Verriegelungsstellung befindet,
- Figur 6: eine Darstellung gemäß der Figur 5, wobei sich das Verriegelungsmittel in der Entriegelungsstellung befindet,
- Figur 7: einen Ausschnitt eines erfindungsgemäßen Routenzuganhängers mit einem aufgeschobenen Ladungsträger während der ersten Hälfte des Einschubweges des Ladungsträgers mit einem in der Entriegelungsstellung befindlichem Sperrelement,
- Figur 8: die Figur 7 während der zweiten Hälfte des Einschubweges des Ladungsträgers und
- Figur 9: die Figuren 7 und 8 mit vollständig eingeschobenem Ladungsträger und einem in der Verriegelungsstellung befindlichem Sperrelement.

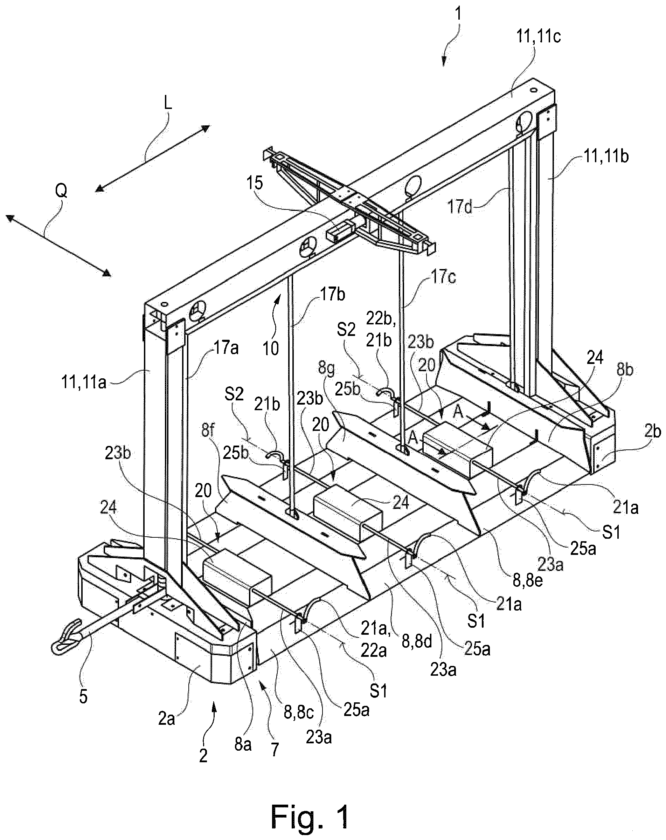

In den Figuren 1 bis 4 ist ein erfindungsgemäßer Routenzuganhänger 1 eines Routenzugs dargestellt.

Der Routenzuganhänger 1 weist ein Fahrgestell 2, das zwei in Fahrzeuglängsrichtung L beabstandet angeordnete Achsmodule 2a, 2b aufweist. Das Achsmodul 2a ist als Vorderachsmodul ausgebildet und mit Vorderrädern 3 versehen. Das Achsmodul 2b ist als Hinterachsmodul ausgebildet und mit Hinterrädern 4 versehen. An dem Achsmodul 2a ist eine lenkbare Deichsel 5 angeordnet, mit der der Routenzuganhänger 1 an ein Zugfahrzeug oder einen vorausfahrenden Routenzuganhänger des Routenzugs angehängt werden kann. Das Achsmodul 2b ist mit einer Anhängekupplung 6 versehen, an die ein weiterer Routenzuganhänger des Routenzugs angehängt werden kann. Die Vorderräder 3 und/oder die Hinterräder 4 können gelenkt sein. Sofern sowohl die Vorderräder 3 als auch die Hinterräder 4 gelenkt sind, kann die Lenkbewegung der Vorderräder und die Lenkbewegung der Hinterräder gekoppelt sein.

Zwischen dem Achsmodul 2a und dem Achsmodul 2b können in den Figuren 1 bis 4 nicht näher dargestellte Ladungsträger aufgenommen und mitgeführt werden. Der Routenzuganhänger 1 weist im dargestellten Ausführungsbeispiel zur Aufnahme der Ladungsträger eine Transportvorrichtung 7 auf, die zwischen den beiden Achsmodulen 2a, 2b angeordnet ist.

Die Transportvorrichtung 7 ist im dargestellten Ausführungsbeispiel mittels einer Hubvorrichtung 10 gegenüber dem von den Achsmodulen 2a, 2b gebildeten Fahrgestell 2 anhebbar und absenkbar. Zur vertikalen Führung der Transportvorrichtung 7 ist jeweils eine nicht näher dargestellte Vertikalführung zwischen der Transportvorrichtung 7 und dem Achsmodul 2a sowie zwischen der Transportvorrichtung 7 und dem Achsmodul 2a vorgesehen.

Im dargestellten Ausführungsbeispiel weist die Transportvorrichtung 7 eine Plattform 8 zum Auffahren von nicht näher dargestellten mit Rollen versehenen Ladungsträgern auf, die sich mit den Rollen auf der Plattform 8 abstützen. Die Plattform 8 erstreckt sich im dargestellten Ausführungsbeispiel in Fahrzeugquerrichtung Q über die gesamte Fahrzeugbreite, so dass die mit Rollen versehenen Ladungsträger von beiden Fahrzeugseiten auf die Plattform 8 hinauf- und herunter geschoben werden können. Im dargestellten Ausführungsbeispiel weist die Plattform 8 im Bereich des Achsmoduls 2a eine in Fahrzeugquerrichtung Q verlaufende vertikale Querplatte 8a auf, die über eine Vertikalführung an dem Achsmodul 2a in vertikaler Richtung geführt ist. Entsprechend weist die Plattform 8 im Bereich des Achsmoduls 2b eine in Fahrzeugquerrichtung Q verlaufende vertikale Querplatte 8b auf, die über eine Vertikalführung an dem Achsmodul 2b in vertikaler Richtung geführt ist.

Die Plattform 8 weist im dargestellten Ausführungsbeispiel - in Fahrzeuglängsrichtung L gesehen - drei Einfahrkanäle 8c, 8d, 8e auf, auf die jeweils ein Ladungsträger mit seinen Rollen aufgefahren werden kann. Zwischen dem vorderen Einfahrkanal 8c und dem mittleren Einfahrkanal 8d ist ein in Fahrzeugquerrichtung Q verlaufende vertikaler Trennsteg 8f angeordnet. Entsprechend ist zwischen dem mittleren Einfahrkanal 8d und dem hinteren Einfahrkanal 8e ein in Fahrzeugquerrichtung Q verlaufende vertikaler Trennsteg 8g angeordnet.

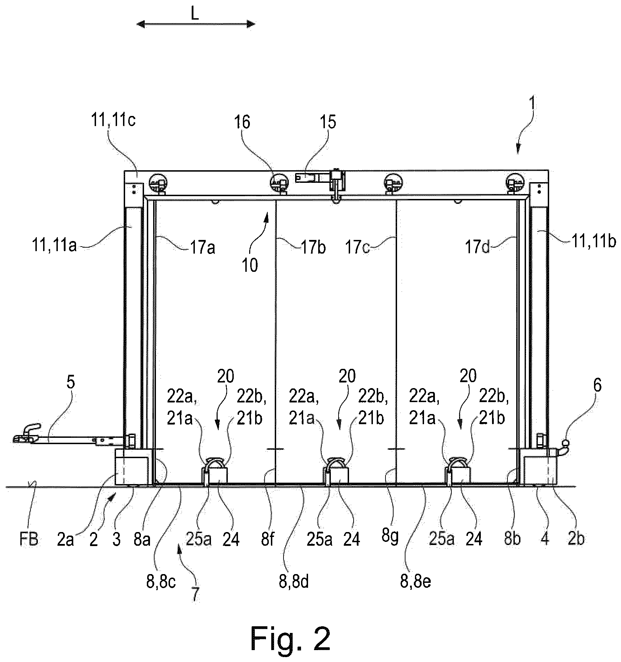

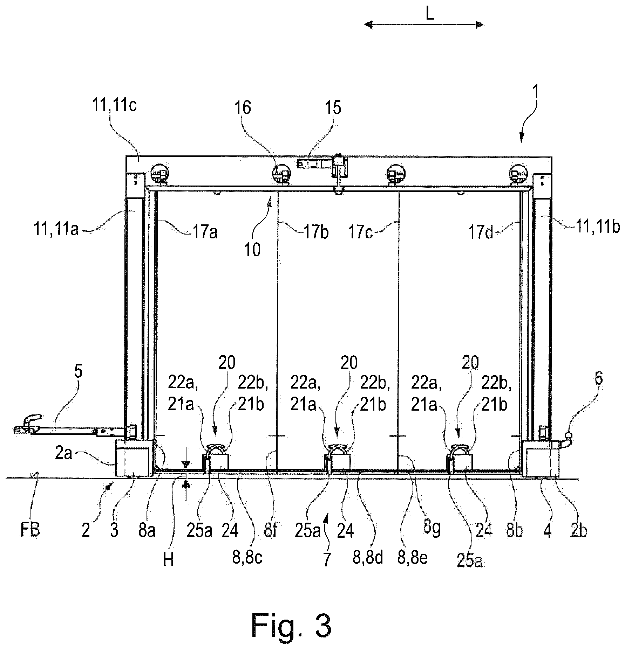

In der Figur 2 ist die Transportvorrichtung 7 in der abgesenkten Stellung und somit in der unteren Endlage dargestellt, in der die Plattform 8 auf die Fahrbahn FB abgesenkt ist, so dass die Ladungsträger mit ihren Rollen auf die Einfahrkanäle 8c, 8d, 8e der Plattform 8 aufgeschoben werden können. Die Figur 3 zeigt die Transportvorrichtung 7 in der angehobenen Stellung und somit in der oberen Endlage dargestellt, in der die Plattform 8 mittels der Hubvorrichtung 10 um den Hub H von der Fahrbahnoberfläche FB angehoben ist.

Der Routenzuganhänger 1 weist im dargestellten Ausführungsbeispiel weiterhin einen die Achsmodule 2a, 2b verbindenden - in der Seitenansicht - bügelförmigen Brückenrahmen 11 auf. Der Brückenrahmen 11 besteht aus einer an dem Achsmodul 2a angeordneten Vertikalstütze 11a, einer an dem Achsmodul 2b angeordneten Vertikalstütze 11b und einem die Vertikalstützen 11a, 11b verbindenden Längsträger 11c. Der Brückenrahmen 11 ist - in Fahrzeugquerrichtung Q gesehen - mittig angeordnet.

Die Hubvorrichtung 10, mit der die Transportvorrichtung 7 angehoben und abgesenkt werden kann, weist im dargestellten Ausführungsbeispiel eine mittels eines Antriebsmotors 15, beispielsweise eines Elektromotors, angetriebene Hubwelle 16 auf, die in dem als Rohrprofil ausgebildeten Längsträger 11c des Brückenrahmens 11 drehbar gelagert ist. Mit der Hubwelle 16 können mehrere Hubgestänge 17a, 17b, 17c, 17d angehoben und abgesenkt werden, die mit ihren unteren Enden an der Transportvorrichtung 7 befestigt sind.

Der Routenzuganhänger 1 ist mit mindestens einem Verriegelungsmittel 20 versehen, das den aufgenommenen Ladungsträger in Fahrzeugquerrichtung Q des Routenzuganhängers 1 sichert.

Im dargestellten Ausführungsbeispiel ist jeder Einfahrkanäle 8c, 8d, 8e mit einem Verriegelungsmittel 20 versehen.

In dem dargestellten Ausführungsbeispiel, in dem der Routenzuganhänger 1 von beiden Seiten mit Ladungsträgern beladen und entladen werden kann, weist jedes Verriegelungsmittel 20 zwei Sperrelemente 21a, 21b auf, die gegenüberliegenden Fahrzeugseiten des Routenzuganhängers 1 zugeordnet sind. Die Sperrelemente 21a befinden sich hierbei an der linken Fahrzeugseite und die Sperrelemente 21b an der rechten Fahrzeugseite.

Jedes Sperrelement 21a, 21b weist einen Sperrfinger 22a, 22b aufweist, der an einer um eine Schwenkachse S1, S2 schwenkbar gelagerten Welle 23a, 23b angeordnet ist.

Die Schwenkachsen S1, S2 der Wellen 23a, 23b sind jeweils in Fahrzeugquerrichtung Q des Routenzuganhängers 1 angeordnet.

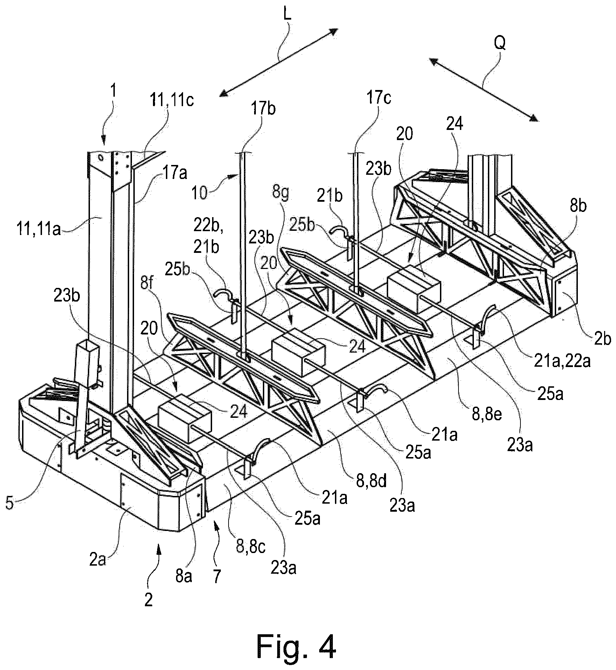

Die Wellen 23a, 23b sind mit einem inneren Ende jeweils in einem Gehäuse 24 des Verriegelungsmittels 20 um die entsprechende Schwenkachse S1, S2 drehbar gelagert. Das Gehäuse 24 ist - wie aus den Figuren 1 und 4 ersichtlich ist - in Fahrzeugquerrichtung Q gesehen - mittig angeordnet. Das Gehäuse 24 ist - wie aus den Figuren 2 und 3 ersichtlich ist - in Fahrzeuglängsrichtung L gesehen - jeweils mittig an dem zugeordneten Einfahrkanal 8c, 8d, 8e angeordnet. An den den Fahrzeugaußenseiten des Routenzuganhängers 1 zugeordneten äußeren Ende der Wellen 23a, 23b sind die Sperrfinger 22a, 22b angeordnet. Die äußeren Ende der Wellen 23a, 23b sind weiterhin jeweils in Lagerböcken 25a, 25b drehbar gelagert.

Das Verriegelungsmittel 20 ist jeweils an der Plattform 8 an deren Oberseite angeordnet.

Jedes Sperrelement 21a bzw. 21b des entsprechenden Verriegelungsmittels 20 ist zwischen einer Verriegelungsstellung und einer Entriegelungsstellung betätigbar. In den Figuren 1 ist 3 befinden sich alle Sperrelemente 21a, 21b in der Verriegelungsstellung. Die Einfahrkanäle 8c, 8d, 8e sind somit jeweils beidseitig verriegelt. In der Figur 4 befinden sich die Sperrelement 21a bzw. 21b der Verriegelungsmittel 20 der Einfahrkanäle 8c, 8e in der Verriegelungsstellung, so dass die Einfahrkanäle 8c, 8e jeweils beidseitig verriegelt sind. An dem Einfahrkanal 8d befindet sich das an der rechten Fahrzeugseite angeordnete Sperrelement 21b in der Verriegelungsstellung und das an der linken Fahrzeugseite angeordnete Sperrelement 21a in der Entriegelungsstellung, so dass der Einfahrkanal 8d an der linken Fahrzeugseite einseitig geöffnet ist zum Einschieben eines Ladungsträgers auf die Plattform des Einfahrkanals 8d.

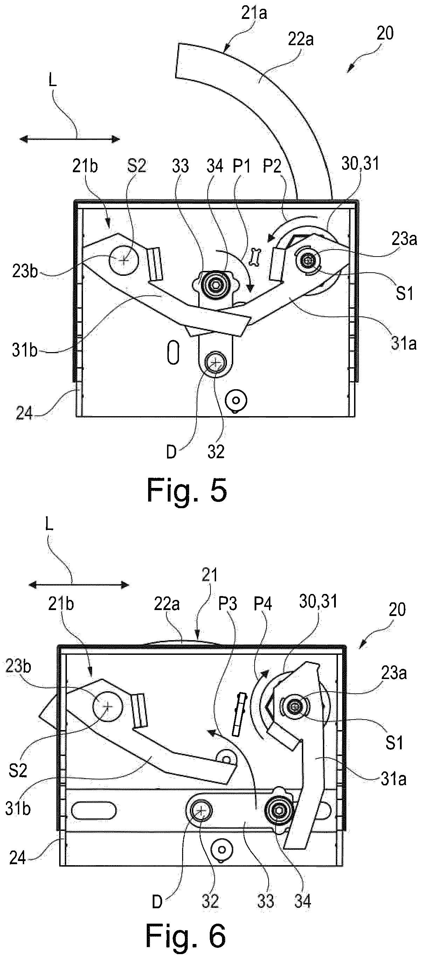

Der Aufbau eines erfindungsgemäßen Verriegelungsmittels 20, das im dargestellten Ausführungsbeispiel zwei Sperrelemente 21a, 21b aufweist, wird im Folgenden in Verbindung mit den Figuren 5 und 6 näher beschrieben. In den Figuren 5 und 6 ist hierbei ein Schnitt durch das Gehäuse 24 eines Verriegelungsmittels 20 gemäß dem Schnitt A-A in der Figur 1 dargestellt.

In den Figuren 5, 6 sind die inneren Enden der beiden Wellen 23a, 23b der Sperrelemente 21a, 21b dargestellt, die um die Schwenkachse S1 bzw. S2 schwenkbar gelagert sind, und der an dem äußeren Wellende der Welle 23a angeordnete Sperrfinger 22a. In der Figur 5 befindet sich der Sperrfinger 22a in der Verriegelungsstellung. In der Figur 6 befindet sich der Sperrfinger 22a in der Entriegelungsstellung.

Das Sperrelement 21a, 21b des Verriegelungsmittels 20 ist jeweils zwischen der Verriegelungsstellung und der Entriegelungsstellung elektromechanisch betätigbar. Das Sperrelement 21a, 21b ist hierzu jeweils von einer Federeinrichtung 30 in Richtung der Verriegelungsstellung betätigt und mittels einer elektrischen Antriebseinrichtung, beispielsweise eines Elektromotors, die in dem Gehäuse 24 angeordnet ist und in den Figuren nicht näher dargestellt ist, in die Entriegelungsstellung betätigt.

Die Federeinrichtung 30 ist als auf der entsprechenden Welle 23a bzw. 23b angeordnete Drehfeder, beispielsweise Schenkelfeder, ausgebildet. In den Figuren 5 und 6 ist die auf die Welle 23a wirkende Federeinrichtung 30 des Sperrelements 21a dargestellt. Die auf die Welle 23a wirkende Federeinrichtung 30 des Sperrelements 21b ist nicht näher dargestellt.

Jedes Sperrelement 21a, 21b weist einen an der Welle 23a, 23b drehfest befestigten Betätigungshebel 31a, 31b auf, der mittels der elektrischen Antriebseinrichtung betätigbar ist.

Die in den Figuren 5 und 6 nicht näher dargestellte elektrische Antriebseinrichtung, die in dem Gehäuse 24 eingebaut ist, weist eine um eine Drehachse D drehbare Antriebswelle 32 auf, an der ein Betätigungsfinger 33 drehfest befestigt, mit dem der Betätigungshebel 31a bzw. 31b des Sperrelements 21a bzw. 21b betätigbar ist.

Der Betätigungsfinger 33 ist von der Antriebseinrichtung zwischen einer Ausgangsstellung (Figur 5) und einer Betätigungsstellung (Figur 6) verschwenkbar. In der in der Figur 5 dargestellten Ausgangstellung des Betätigungsfingers 33 sind die Sperrelemente 21a, 21b mittels der entsprechenden Federeinrichtung 30 in die Verriegelungsstellung betätigbar. In der in der Figur 6 dargestellten Betätigungsstellung des Betätigungsfingers 33 ist das Sperrelement 21a mittels der elektrischen Antriebseinrichtung in die Entriegelungsstellung betätigt. Es versteht sich, dass der Betätigungsfinger 33 eine weitere Betätigungsstellung aufweist, in der das Sperrelement 21b mittels der elektrischen Antriebseinrichtung in die Entriegelungsstellung beaufschlagt ist.

Die Antriebswelle 32 der elektrischen Antriebseinrichtung ist parallel zu den Wellen 23, 23b der Sperrelemente 21a, 21b angeordnet.

Die beiden Wellen 23a, 23b der von der elektrischen Antriebseinrichtung in die Entriegelungsstellung betätigbaren Sperrelemente 21a, 21b sind in Fahrzeuglängsrichtung L des Routenzuganhängers voneinander beabstandet angeordnet. Die Antriebswelle 32 der elektrischen Antriebseinrichtung ist - in Fahrzeuglängsrichtung L gesehen - mittig zwischen den Wellen 23a, 23b der Sperrelemente 21a, 21b angeordnet.

Der Betätigungsfinger 33 ist im dargestellten Ausführungsbeispiel mit einer drehbar am Betätigungsfinger 33 angeordneten Betätigungsrolle 34 versehen, die mit den entsprechenden Betätigungshebeln 31a, 31b der Sperrelemente 21a, 21b zu deren Betätigung in Kontakt gelangt.

Die Sperrfinger 22a, 22b sind im dargestellten Ausführungsbeispiel kreisbogenförmig ausgebildet. Die Sperrfinger 22a, 22b sind hierbei nach vertikal unten gekrümmt.

Zur Ansteuerung der elektrischen Antriebseinrichtung des jeweiligen Verriegelungsmittels 20 ist jeweils mindestens ein Ansteuerelement, insbesondere ein Tastschalter, vorgesehen. Die elektrische Antriebseinrichtung ist in Abhängigkeit von dem Ansteuerelement derart angesteuert, dass die elektrische Antriebseinrichtung bei einer Betätigung des Ansteuerelements das Sperrelement 21a bzw. 21b in die Entriegelungsstellung betätigt. Die elektrische Antriebseinrichtung ist hierzu derart in Abhängigkeit von dem Ansteuerelement angesteuert, dass die elektrische Antriebseinrichtung bei einer Betätigung des Ansteuerelements den Betätigungsfinger 33 in die entsprechende Betätigungsstellung verschwenkt. In dem dargestellten Ausführungsbeispiel, bei dem die elektrische Antriebseinrichtung die beiden Sperrelemente 21a, 21b betätigt, sind bevorzugt zwei Ansteuerelemente vorgesehen, wobei bei einer Betätigung eines ersten Ansteuerelements von dem elektrischen Antriebsmotor das Sperrelement 21a in die Entriegelungsstellung betätigt wird und bei einer Betätigung eines zweiten Ansteuerelements von dem elektrischen Antriebsmotor das Sperrelement 21b in die Entriegelungsstellung betätigt wird. Der Entriegelungsprozess des entsprechenden Sperrelements 21a, 21b erfolgt somit elektrisch durch eine entsprechende Ansteuerung der elektrischen Antriebseinrichtung in die entsprechende Betätigungsstellung des Betätigungsfingers 33.

Bei dem erfindungsgemäßen Verriegelungsmittel 20 wird der Verriegelungsprozess des entsprechenden Sperrelements 21a, 21b durch das Einschieben des Ladungsträgers in den entsprechenden Einfahrkanäle 8c, 8d, 8e.

Hierzu ist eine in den Figuren nicht näher dargestellte Sensoreinrichtung vorgesehen, die eine bestimmte Einschubposition des Ladungsträgers detektiert. Die elektrische Antriebseinrichtung ist in Abhängigkeit von der Sensoreinrichtung derart angesteuert, dass das Sperrelement 21a, 21b von der Federeinrichtung 30 in Richtung der Verriegelungsstellung betätigbar ist. Hierzu ist die elektrische Antriebseinrichtung in Abhängigkeit von der Sensoreinrichtung derart angesteuert, dass die elektrische Antriebseinrichtung den Betätigungsfinger 33 in die in der Figur 5 dargestellte Ausgangsstellung zurückverschwenkt.

Die Sensoreinrichtung ist bevorzugt als Lichtschranke ausgebildet, die in Fahrzeugquerrichtung Q des Routenzuganhängers 1 mittig angeordnet ist. Die Sensoreinrichtung erfasst somit, wenn sich in dem entsprechenden Einfahrkanal 8c bzw. 8d bzw. 8e ein Ladungsträger in der Mitte befindet und bis zur Mitte des Einfahrkanal 8c bzw. 8d bzw. 8e eingeschoben ist.

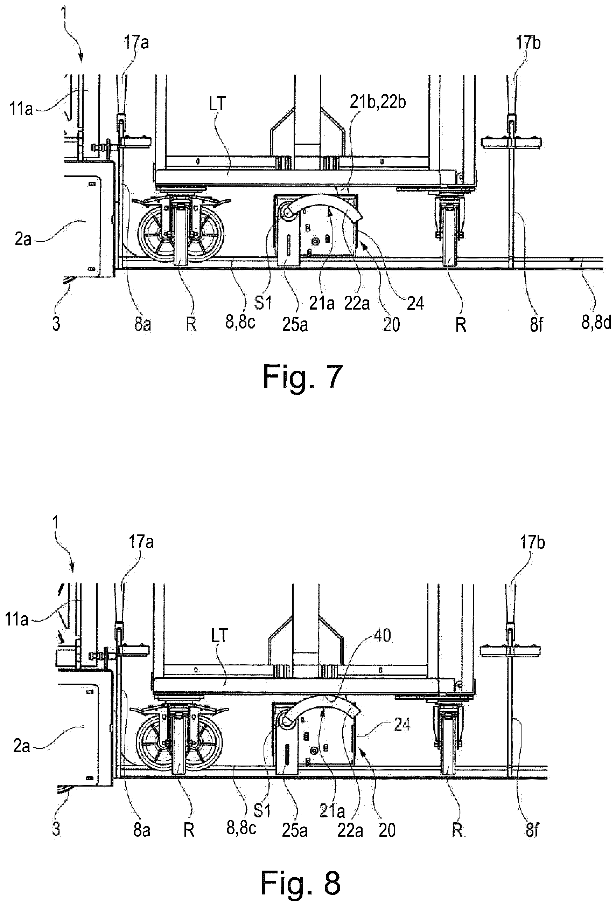

Die Funktion des erfindungsgemäßen Verriegelungsmittels 20 wird im Folgenden anhand der Figuren 5 bis 9 beschrieben. In den Figuren 7 bis 9 ist hierbei das Einschieben eines mit Rollen R versehenen Ladungsträgers LT in den Einfahrkanal 8c von der linken Fahrzeugseite des Routenzuganhängers 1 aus dargestellt.

In der Figur 5 befindet sich der Betätigungsfinger 33 der Antriebswelle 32 der elektrischen Antriebseinrichtung in der Ausgangsstellung und ist vertikal angeordnet. Die an den Betätigungsfinger 33 angeordnete Betätigungsrolle 34 hat keinen Kontakt zu den beiden Betätigungshebeln 31a, 31b, so dass beide Sperrelemente 21a, 21b von den entsprechenden Federeinrichtungen 30 in die jeweilige Verriegelungsstellung betätigt sind, in denen die beiden Sperrfinger 22a, 22b nach oben verschwenkt sind. Die in der Figur 5 dargestellte Stellung stellt die Grundstellung des Verriegelungsmittels 20 dar. Da die an den Betätigungsfinger 33 angeordnete Betätigungsrolle 34 keinen Kontakt zu den beiden Betätigungshebeln 31a, 31b hat, ist der elektrische Antriebseinrichtung in der Grundstellung lastfrei.

Um das Sperrelement 21a in die Entriegelungsstellung zu betätigen und dadurch den Einfahrkanal 8c bzw. 8d bzw. 8e an der linken Fahrzeugseite zu öffnen, wird die elektrische Antriebseinrichtung derart angesteuert, dass die Antriebseinrichtung die Antriebswelle 32 mit dem Betätigungsfinger 33 im Uhrzeigersinn um einen Drehwinkel von 90° in die Betätigungsstellung dreht, wie in der Figur 5 mit dem Pfeil P1 verdeutlicht ist. Dadurch gelangt der Betätigungshebel 33 mittels der Betätigungsrolle 34 mit dem Betätigungshebel 31a des Sperrelements 21a in Kontakt und verschwenkt den Betätigungshebel 31a und somit die Welle 23a im Gegenuhrzeigersinn entgegen der Kraft der Federeinrichtung 30, wie in der Figur 5 mit dem Pfeil P2 verdeutlicht ist, so dass der Sperrfinger 22a nach unten in die Entriegelungsstellung des Sperrelements 21a verschwenkt. Dieser Zustand, in der der Betätigungsfinger 33 im Uhrzeigersinn um einen Drehwinkel von 90° in die Betätigungsstellung verschwenkt ist und der Betätigungshebel 31a des Sperrelements 21a derart betätigt ist, dass sich das Sperrelement 21a in der Entriegelungsstellung befindet, ist in der Figur 6 dargestellt. Der Betätigungshebel 31b des Sperrelements 21b ist - wie aus der Figur 6 ersichtlich ist - nicht betätigt, so dass sich das Sperrelement 21b und der Sperrfinger 22b weiter in der Verriegelungsstellung befindet.

Wie aus der Figur 6 ersichtlich ist, steht in der Betätigungsstellung des Betätigungsfingers 33 der Betätigungshebel 31a über dem oberen Totpunkt des Betätigungsfingers 33, so dass die elektrische Antriebseinrichtung ebenfalls in der in der Figur 6 dargestellten Betätigungsstellung lastfrei ist. Die elektrische Antriebseinrichtung benötigt somit nur zum Verschwenken des Betätigungsfingers 33 von der Ausgangsstellung in die Betätigungsstellung Energie.

Die Figur 7 zeigt den Einfahrkanal 8c mit dem Verriegelungsmittel 20 in der Stellung gemäß der Figur 6, in der der Sperrfinger 22a des Sperrelements 21a nach unten in die Entriegelungsstellung verschwenkt ist und der Einfahrkanal 8c an der linken Fahrzeugseite des Routenzuganhängers 1 geöffnet ist und sich das Sperrelement 21b und der Sperrfinger 22b weiter in der Verriegelungsstellung befindet. Der Ladungsträger LT kann somit an dem an der linken Fahrzeugseite des Routenzuganhängers 1 geöffneten Einfahrkanal 8c mit seinen Rollen R auf die Plattform 8 des Einfahrkanals 8c eingeschoben werden. Da das Verriegelungsmittel 20 in Fahrzeuglängsrichtung L mittig an dem Einfahrkanal 8c angeordnet ist, befindet sich das Verriegelungsmittel 20 zwischen den Rollen R des Ladungsträgers LT, so dass der Ladungsträger LT den nach unten verschwenkten und in der Entriegelungsstellung befindlichen Sperrfinger 22a und das Gehäuse 24 überfährt.

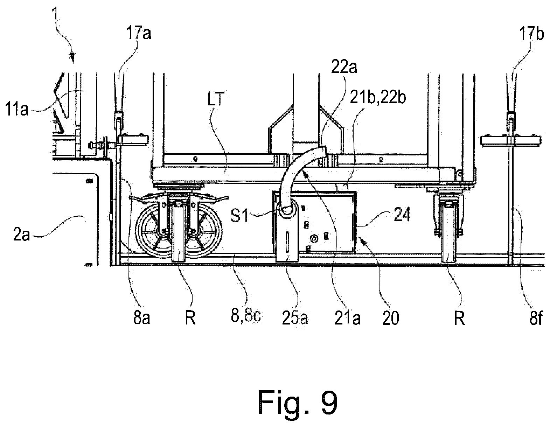

Sobald der Ladungsträger LT in Fahrzeugquerrichtung Q des Routenzuganhängers 1 bis zur Fahrzeugmitte des Routenzuganhängers 1 eingeschoben ist, unterbricht der Ladungsträger LT die Lichtschranke, infolge dessen die elektrische Antriebseinrichtung derart angesteuert wird, dass der Betätigungsfinger 33 im Gegenuhrzeigersinn - wie in der Figur 6 mit dem Pfeil P3 verdeutlicht ist - zurück in die vertikale Ausgangsstellung verschwenkt wird. Dadurch wird der Betätigungshebel 31a und die Welle 23a des Sperrelements 21a von der Federeinrichtung 30 im Uhrzeigersinn verschwenkt - wie in der Figur 6 mit dem Pfeil P4 verdeutlicht ist - und somit das Sperrelement 21a von der Federeinrichtung 30 in Richtung der Verriegelungsstellung betätigt. Dabei gelangt der nach oben schwenkende bogenförmige Sperrfinger 22a - wie in der Figur 8 dargestellt ist - mit einer an der Unterseite des Ladungsträger LT angeordneten Anschlagfläche 40 in Kontakt, die das weitere Verschwenken des Sperrfingers 22a nach oben in die Verriegelungsstellung verhindert, so dass sich der Sperrfinger 22a in einer Mittelstellung zwischen der Verriegelungsstellung und der Entriegelungsstellung befindet. Der Ladungsträger LT kann dann weiter in Fahrzeugquerrichtung Q in den Einfahrkanal 8c eingeschoben werden, wobei der Sperrfinger 22a an der Anschlagfläche 40 entlanggleitet und somit der Ladungsträger LT über den in der Mittelstellung befindlichen Sperrfinger 22a gleitet, bis der Ladungsträger LT vollständig eingeschoben ist und mit dem vorderen Ende an dem in der Verriegelungsstellung befindlichen Sperrelement 21b an der rechten Fahrzeugseite des Routenzuganhängers 1 anschlägt. In der vollständig eingeschobenen Stellung hat der Sperrfinger 22a keinen Kontakt mehr mit der Anschlagfläche 40, so dass der Sperrfinger 22a von der Federeinrichtung 30 weiter nach oben in die Verriegelungsstellung verschwenkt wird und den vollständig eingeschobene und somit in der Ladeposition befindlichen Ladungsträger LT an dem hinteren Ende verriegelt, wie in der Figur 9 dargestellt ist. In der Ladeposition ist somit der in den Einfahrkanal 8c eingeschobene Ladungsträger LT von den beiden in der Verriegelungsstellung befindlichen Sperrfingern 22a, 22b in Fahrzeugquerrichtung Q des Routenzuganhängers 1 gesichert.

Soll der Ladungsträger LT von der rechten Fahrzeugseite des Routenzuganhängers 1 aus eingeschoben werden, wird - um das Sperrelement 21b in die Entriegelungsstellung zu betätigen und dadurch den Einfahrkanal 8c bzw. 8d bzw. 8e an der rechten Fahrzeugseite zu öffnen - die elektrische Antriebseinrichtung derart angesteuert, dass die Antriebseinrichtung die Antriebswelle 32 mit dem Betätigungsfinger 33 ausgehend von der in der Figur 5 dargestellten Ausgangsstellung im Gegenuhrzeigersinn um einen Drehwinkel von 90° in eine zweite Betätigungsstellung dreht, in der der Betätigungshebel 33 mit der Betätigungsrolle 34 mit dem Betätigungshebel 31b des Sperrelements 21b in Kontakt gelangt und den Betätigungshebel 31b und somit die Welle 23b im Uhrzeigersinn entgegen der Kraft der Federeinrichtung 30 verschwenkt, so dass der Sperrfinger 22b nach unten in die Entriegelungsstellung des Sperrelements 21b verschwenkt.

## Patentansprüche

1. Routenzuganhänger (1) mit einem Fahrgestell (2) und einer Transportvorrichtung (7) für die Aufnahme mindestens eines Rollen (R) aufweisenden Ladungsträgers (LT), wobei der Routenzuganhänger (1) mit mindestens einem Verriegelungsmittel (20) versehen ist, das den aufgenommenen Ladungsträger (LT) in Fahrzeugquerrichtung (Q) des Routenzuganhängers (1) sichert, **dadurch gekennzeichnet, dass** das Verriegelungsmittel (20) ein zwischen einer Verriegelungsstellung und einer Entriegelungsstellung elektromechanisch betätigbares Sperrelement (21a; 21b) aufweist, wobei das Sperrelement (21a; 21b) von einer Federeinrichtung (30) in Richtung der Verriegelungsstellung betätigt ist und mittels einer elektrischen Antriebseinrichtung in die Entriegelungsstellung betätigt ist.

2. Routenzuganhänger nach Anspruch 1, **dadurch gekennzeichnet, dass** das Sperrelement (21a; 21b) einen Sperrfinger (22a; 22b) aufweist, der an einer um eine Schwenkachse (S1; S2) schwenkbar gelagerten Welle (23a; 23b) angeordnet ist.

3. Routenzuganhänger nach Anspruch 2, **dadurch gekennzeichnet, dass** die Schwenkachse (S1; S2) der Welle (23a; 23b) in Fahrzeugquerrichtung (Q) angeordnet ist.

4. Routenzuganhänger nach Anspruch 2 oder 3, **dadurch gekennzeichnet, dass** die Federeinrichtung (30) als auf der Welle (23a; 23b) angeordnete Drehfeder, insbesondere Schenkelfeder, ausgebildet ist.

5. Routenzuganhänger nach einem der Ansprüche 2 bis 4, **dadurch gekennzeichnet, dass** das Sperrelement (21a; 21b) einen an der Welle (23a; 23b) angeordneten Betätigungshebel (31a; 31b) aufweist, der mittels der elektrischen Antriebseinrichtung betätigbar ist.

6. Routenzuganhänger nach einem der Ansprüche 2 bis 4, **dadurch gekennzeichnet, dass** die elektrische Antriebseinrichtung einen an einer Antriebswelle (32) der Antriebseinrichtung angeordneten Betätigungsfinger (33) aufweist, mit dem die Welle (23a; 23b) des Sperrelements (21a; 21b), insbesondere der Betätigungshebel (31a; 31b) des Sperrelements (21a; 21b), betätigbar ist.

7. Routenzuganhänger nach Anspruch 6, **dadurch gekennzeichnet, dass** der Betätigungsfinger (33) von der Antriebseinrichtung zwischen einer Ausgangsstellung und einer Betätigungsstellung verschwenkbar ist, wobei in der Ausgangsstellung des Betätigungsfingers (33) das Sperrelement (21a; 21b) mittels der Federeinrichtung (30) in die Verriegelungsstellung betätigbar ist und sich in der Betätigungsstellung des Betätigungsfingers (33) das Sperrelement (21a; 21b) in der Entriegelungsstellung befindet.

8. Routenzuganhänger nach Anspruch 6 oder 7, **dadurch gekennzeichnet, dass** die Antriebswelle (32) der Antriebseinrichtung parallel zur Welle (23a; 23b) des Sperrelements (21a; 21b) angeordnet ist.

9. Routenzuganhänger nach einem der Ansprüche 6 bis 8, **dadurch gekennzeichnet, dass** der Betätigungsfinger (33) mit einer drehbaren Betätigungsrolle (34) versehen ist, mit der der Betätigungshebel (31a; 31b) des Sperrelements (21a; 21b) betätigbar ist.

10. Routenzuganhänger nach einem der Ansprüche 2 bis 9, **dadurch gekennzeichnet, dass** der Sperrfinger (22a; 22b) kreisbogenförmig ausgebildet ist.

11. Routenzuganhänger nach einem der Ansprüche 1 bis 10, **dadurch gekennzeichnet, dass** das Verriegelungsmittel (20) zwei Sperrelemente (21a, 21b) aufweist, die gegenüberliegenden Fahrzeugseiten des Routenzuganhängers (1) zugeordnet sind.

12. Routenzuganhänger nach Anspruch 11, **dadurch gekennzeichnet, dass** die beiden Sperrelemente (21a, 21b) mittels einer elektrischen Antriebseinrichtung in die jeweilige Entriegelungsstellung betätigbar sind.

13. Routenzuganhänger nach Anspruch 11 oder 12, **dadurch gekennzeichnet, dass** die Wellen (23a, 23b) der Sperrelemente (21a, 21b) voneinander beabstandet angeordnet sind und die Antriebswelle (32) der Antriebseinrichtung mittig zwischen den Wellen (23a, 23b) der Sperrelemente (21a, 21b) angeordnet ist.

14. Routenzuganhänger nach einem der Ansprüche 1 bis 13, **dadurch gekennzeichnet, dass** ein Ansteuerelement, insbesondere ein Tastschalter, vorgesehen ist und die elektrische Antriebseinrichtung in Abhängigkeit von dem Ansteuerelement derart angesteuert ist, dass die elektrische Antriebseinrichtung bei einer Betätigung des Ansteuerelements das Sperrelement (21a, 21b) die Entriegelungsstellung betätigt.

15. Routenzuganhänger nach Anspruch 14, **dadurch gekennzeichnet, dass** die elektrische Antriebseinrichtung in Abhängigkeit von dem Ansteuerelement derart angesteuert ist, dass die elektrische Antriebseinrichtung bei einer Betätigung des Ansteuerelements den Betätigungsfinger (33) in die Betätigungsstellung verschwenkt.

16. Routenzuganhänger nach einem der Ansprüche 1 bis 15, **dadurch gekennzeichnet, dass** eine Sensoreinrichtung zur Detektierung einer Einschubposition des Ladungsträgers (LT) vorgesehen ist und die elektrische Antriebseinrichtung in Abhängigkeit von der Sensoreinrichtung derart angesteuert ist, dass das Sperrelement (21a, 21b) in Richtung der Verriegelungsstellung betätigbar ist.

17. Routenzuganhänger nach Anspruch 16, **dadurch gekennzeichnet, dass** die elektrische Antriebseinrichtung in Abhängigkeit von der Sensoreinrichtung derart angesteuert ist, dass die elektrische Antriebseinrichtung den Betätigungsfinger (33) in die Ausgangsstellung verschwenkt.

18. Routenzuganhänger nach Anspruch 16 oder 17, **dadurch gekennzeichnet, dass** die Sensoreinrichtung als Lichtschranke ausgebildet ist.

19. Routenzuganhänger nach einem der Ansprüche 16 bis 18, **dadurch gekennzeichnet, dass** die Sensoreinrichtung in Fahrzeugquerrichtung (Q) mittig angeordnet ist.

20. Routenzuganhänger nach einem der Ansprüche 1 bis 19, **dadurch gekennzeichnet, dass** der Routenzuganhänger (1) zur Aufnahme des mindestens einen Ladungsträgers (LT) eine Transportvorrichtung (7), insbesondere eine gegenüber dem Fahrgestell (2) anhebbare und absenkbare Transportvorrichtung (7), aufweist.

21. Routenzuganhänger nach Anspruch 20, **dadurch gekennzeichnet, dass** die Transportvorrichtung (7) eine Plattform (8) zum Auffahren der Rollen (R) des Ladungsträgers (LT) aufweist.

22. Routenzuganhänger nach Anspruch 21, **dadurch gekennzeichnet, dass** das Verriegelungsmittel (20) an der Plattform (8) angeordnet ist.

23. System umfassend einen Routenzuganhänger (1) nach einem der vorangegangenen Ansprüche und mindestens einen Rollen (R) aufweisenden Ladungsträger (LT), wobei der Ladungsträger (LT) an der Unterseite eine Anschlagfläche (40) für das Sperrelement (21a; 21b) aufweist.

## Claims

1. Tugger train trailer (1) having a chassis (2) and a transport device (7) for receiving at least one load carrier (LT) having casters (R), wherein the tugger train trailer (1) is provided with at least one locking means (20) which secures the received load carrier (LT) in the vehicle transverse direction (Q) of the tugger train trailer (1), **characterized in that** the locking means (20) has a blocking element (21a; 21b) which is electromechanically activatable between a locking position and an unlocking position, wherein the blocking element (21a; 21b) is activated in the direction of the locking position by a spring installation (30), and is activated to the unlocking position by means of an electric drive installation.

2. Tugger train trailer according to Claim 1, **characterized in that** the blocking element (21a; 21b) has a blocking finger (22a; 22b) which is disposed on a shaft (23a; 23b) mounted so as to be pivotable about a pivot axis (S1; S2).

3. Tugger train trailer according to Claim 2, **characterized in that** the pivot axis (S1; S2) of the shaft (23a; 23b) is disposed in the vehicle transverse direction (Q).

4. Tugger train trailer according to Claim 2 or 3, **characterized in that** the spring installation (30) is configured as a torsion spring, in particular leg spring, disposed on the shaft (23a; 23b).

5. Tugger train trailer according to one of Claims 2 to 4, **characterized in that** the blocking element (21a; 21b) has an activation lever (31a; 31b) which is disposed on the shaft (23a; 23b) and is activatable by means of the electric drive installation.

6. Tugger train trailer according to one of Claims 2 to 4, **characterized in that** the electric drive installation has an activation finger (33) which is disposed on a drive shaft (32) of the drive installation and by way of which the shaft (23a; 23b) of the blocking element (21a; 21b), in particular the activation lever (31a; 31b) of the blocking element (21a; 21b) is activatable.

7. Tugger train trailer according to Claim 6, **characterized in that** the activation finger (33) is pivotable between an initial position and an activation position by the drive installation, wherein the blocking element (21a; 21b) in the initial position of the activation finger (33) is activatable to the locking position by means of the spring installation (30), and the blocking element (21a; 21b) in the activation position of the activation finger (33) is in the unlocking position.

8. Tugger train trailer according to Claim 6 or 7, **characterized in that** the drive shaft (32) of the drive installation is disposed so as to be parallel to the shaft (23a; 23b) of the blocking element (21a; 21b).

9. Tugger train trailer according to one of Claims 6 to 8, **characterized in that** the activation finger (33) is provided with a rotatable activation roller (34) by way of which the activation lever (31a; 31b) of the blocking element (21a; 21b) is activatable.

10. Tugger train trailer according to one of Claims 2 to 9, **characterized in that** the blocking finger (22a; 22b) is configured to be of an arcuate shape.

11. Tugger train trailer according to one of Claims 1 to 10, **characterized in that** the locking means (20) has two blocking elements (21a, 21b) which are assigned to opposite vehicle sides of the tugger train trailer (1).

12. Tugger train trailer according to Claim 11, **characterized in that** the two blocking elements (21a, 21b) are activatable to the respective unlocking position by means of an electric drive installation.

13. Tugger train trailer according to Claim 11 or 12, **characterized in that** the shafts (23a, 23b) of the blocking elements (21a, 21b) are disposed so as to be mutually spaced apart, and the drive shaft (32) of the drive installation is disposed so as to be centric between the shafts (23a, 23b) of the blocking elements (21a, 21b).

14. Tugger train trailer according to one of Claims 1 to 13, **characterized in that** an actuating element, in particular a pushbutton, is provided, and the electric drive installation as a function of the actuating element is actuated in such a manner that, when the actuating element is activated, the electric drive installation activates the blocking element (21a, 21b) to the unlocking position.

15. Tugger train trailer according to Claim 14, **characterized in that** the electric drive installation as a function of the actuating element is actuated in such a manner that, when the actuating element is activated, the electric drive installation pivots the activation finger (33) to the activation position.

16. Tugger train trailer according to one of Claims 1 to 15, characterized that a sensor installation for detecting an insertion position of the load carrier (LT) is provided, and the electric drive installation as a function of the sensor installation is actuated in such a manner that the blocking element (21a, 21b) is activatable in the direction of the locking position.

17. Tugger train trailer according to Claim 16, **characterized in that** the electric drive installation as a function of the sensor installation is actuated in such a manner that the electric drive installation pivots the activation finger (33) to the initial position.

18. Tugger train trailer according to Claim 16 or 17, **characterized in that** the sensor installation is configured as a light barrier.

19. Tugger train trailer according to one of Claims 16 to 18, **characterized in that** the sensor installation is disposed so as to be centric in the vehicle transverse direction (Q).

20. Tugger train trailer according to one of Claims 1 to 19, **characterized in that** the tugger train trailer (1) for receiving the at least one load carrier (LT) has a transport device (7), in particular a transport device (7) which is able to be lifted and lowered relative to the chassis (2).

21. Tugger train trailer according to Claim 20, **characterized in that** the transport device (7) has a platform (8) for the casters (R) of the load carrier (LT) to drive onto.

22. Tugger train trailer according to Claim 21, **characterized in that** the locking means (20) is disposed on the platform (8).

23. System comprising a tugger train trailer (1) according to one of the preceding claims, and at least one load carrier (LT) having casters (R), wherein the load carrier (LT) on the lower side has a detent face (40) for the blocking element (21a; 21b) .

## Revendications

1. Remorque de train de manutention (1) avec un châssis (2) et un dispositif de transport (7) pour la réception d'au moins un support de charge (LT) présentant des roulettes (R), la remorque de train de manutention (1) étant pourvue d'au moins un moyen de verrouillage (20), qui immobilise le support de charge (LT) reçu dans la direction transversale de véhicule (Q) de la remorque de train de manutention (1), **caractérisée en ce que** le moyen de verrouillage (20) présente un élément de blocage (21a ; 21b) pouvant être actionné électromécaniquement entre une position de verrouillage et une position de déverrouillage, l'élément de blocage (21a ; 21b) étant actionné par un appareil à ressort (30) en direction de la position de verrouillage et étant actionné dans la position de déverrouillage au moyen d'un appareil d'entraînement électrique.

2. Remorque de train de manutention selon la revendication 1, **caractérisée en ce que** l'élément de blocage (21a ; 21b) présente un doigt de blocage (22a ; 22b) qui est agencé sur un arbre (23a ; 23b) monté pivotant autour d'un axe de pivotement (S1 ; S2).

3. Remorque de train de manutention selon la revendication 2, **caractérisée en ce que** l'axe de pivotement (S1 ; S2) de l'arbre (23a ; 23b) est agencé dans la direction transversale de véhicule (Q).

4. Remorque de train de manutention selon la revendication 2 ou 3, **caractérisée en ce que** l'appareil à ressort (30) est réalisé sous forme de ressort de torsion, notamment de ressort à branches, agencé sur l'arbre (23a ; 23b).

5. Remorque de train de manutention selon l'une quelconque des revendications 2 à 4, **caractérisée en ce que** l'élément de blocage (21a ; 21b) présente un levier d'actionnement (31a ; 31b) agencé sur l'arbre (23a ; 23b), qui peut être actionné au moyen de l'appareil d'entraînement électrique.

6. Remorque de train de manutention selon l'une quelconque des revendications 2 à 4, **caractérisée en ce que** l'appareil d'entraînement électrique présente un doigt d'actionnement (33) agencé sur un arbre d'entraînement (32) de l'appareil d'entraînement, avec lequel l'arbre (23a ; 23b) de l'élément de blocage (21a ; 21b), notamment le levier d'actionnement (31a ; 31b) de l'élément de blocage (21a ; 21b), peut être actionné.

7. Remorque de train de manutention selon la revendication 6, **caractérisée en ce que** le doigt d'actionnement (33) peut être pivoté par l'appareil d'entraînement entre une position de départ et une position d'actionnement ; dans la position de départ du doigt d'actionnement (33), l'élément de blocage (21a ; 21b) pouvant être actionné dans la position de verrouillage au moyen de l'appareil à ressort (30) et, dans la position d'actionnement du doigt d'actionnement (33), l'élément de blocage (21a ; 21b) se trouvant dans la position de déverrouillage.

8. Remorque de train de manutention selon la revendication 6 ou 7, **caractérisée en ce que** l'arbre d'entraînement (32) de l'appareil d'entraînement est agencé parallèlement à l'arbre (23a ; 23b) de l'élément de blocage (21a ; 21b).

9. Remorque de train de manutention selon l'une quelconque des revendications 6 à 8, **caractérisée en ce que** le doigt d'actionnement (33) est muni d'une roulette d'actionnement rotative (34) avec laquelle le levier d'actionnement (31a ; 31b) de l'élément de blocage (21a ; 21b) peut être actionné.

10. Remorque de train de manutention selon l'une quelconque des revendications 2 à 9, **caractérisée en ce que** le doigt de blocage (22a ; 22b) est réalisé en forme d'arc de cercle.

11. Remorque de train de manutention selon l'une quelconque des revendications 1 à 10, **caractérisée en ce que** le moyen de verrouillage (20) présente deux éléments de blocage (21a, 21b) associés à des côtés de véhicule opposés de la remorque de train de manutention (1).

12. Remorque de train de manutention selon la revendication 11, **caractérisée en ce que** les deux éléments de blocage (21a, 21b) peuvent être actionnés dans la position de déverrouillage respective au moyen d'un appareil d'entraînement électrique.

13. Remorque de train de manutention selon la revendication 11 ou 12, **caractérisée en ce que** les arbres (23a, 23b) des éléments de blocage (21a, 21b) sont agencés à distance l'un de l'autre et l'arbre d'entraînement (32) de l'appareil d'entraînement est agencé au centre entre les arbres (23a, 23b) des éléments de blocage (21a, 21b).

14. Remorque de train de manutention selon l'une quelconque des revendications 1 à 13, **caractérisée en ce qu'**il est prévu un élément de commande, notamment un interrupteur à bouton-poussoir, et l'appareil d'entraînement électrique est commandé en fonction de l'élément de commande de telle sorte que l'appareil d'entraînement électrique actionne l'élément de blocage (21a, 21b) dans la position de déverrouillage lors d'un actionnement de l'élément de commande.

15. Remorque de train de manutention selon la revendication 14, **caractérisée en ce que** l'appareil d'entraînement électrique est commandé en fonction de l'élément de commande de telle sorte que l'appareil d'entraînement électrique fait pivoter le doigt d'actionnement (33) dans la position d'actionnement lors d'un actionnement de l'élément de commande.

16. Remorque de train de manutention selon l'une quelconque des revendications 1 à 15, **caractérisée en ce qu'**un appareil de capteur est prévu pour détecter une position d'insertion du support de charge (LT), et l'appareil d'entraînement électrique est commandé en fonction de l'appareil de capteur de telle sorte que l'élément de blocage (21a, 21b) peut être actionné en direction de la position de verrouillage.

17. Remorque de train de manutention selon la revendication 16, **caractérisée en ce que** l'appareil d'entraînement électrique est commandé en fonction de l'appareil de capteur de telle sorte que l'appareil d'entraînement électrique fait pivoter le doigt d'actionnement (33) dans la position de départ.

18. Remorque de train de manutention selon la revendication 16 ou 17, **caractérisée en ce que** l'appareil de capteur est réalisé sous forme de barrière lumineuse.

19. Remorque de train de manutention selon l'une quelconque des revendications 16 à 18, **caractérisée en ce que** l'appareil de capteur est agencé au centre dans la direction transversale de véhicule (Q).

20. Remorque de train de manutention selon l'une quelconque des revendications 1 à 19, **caractérisée en ce que** la remorque de train de manutention (1) présente un dispositif de transport (7) pour recevoir l'au moins un support de charge (LT), notamment un dispositif de transport (7) pouvant être soulevé et abaissé par rapport au châssis (2).

21. Remorque de train de manutention selon la revendication 20, **caractérisée en ce que** le dispositif de transport (7) présente une plate-forme (8) pour l'accès des roulettes (R) du support de charge (LT).

22. Remorque de train de manutention selon la revendication 21, **caractérisée en ce que** le moyen de verrouillage (20) est agencé sur la plate-forme (8).

23. Système comprenant une remorque de train de manutention (1) selon l'une des revendications précédentes et au moins un support de charge (LT) présentant des roulettes (R), le support de charge (LT) présentant sur le côté inférieur une surface de butée (40) pour l'élément de blocage (21a ; 21b).
